(19)
Europäisches
Patentamt

European
Patent Office

Office européen
des brevets

(11) **EP 4 036 724 A1**

(12) **EUROPEAN PATENT APPLICATION**
published in accordance with Art. 153(4) EPC

(43) Date of publication:
**03.08.2022 Bulletin 2022/31**

(21) Application number: **20868673.3**

(22) Date of filing: **22.09.2020**

(51) International Patent Classification (IPC):
**G06F 9/50** (2006.01)

(86) International application number:
**PCT/CN2020/116794**

(87) International publication number:
**WO 2021/057713 (01.04.2021 Gazette 2021/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.09.2019 CN 201910914360**

(71) Applicant: **Anhui Cambricon Information
Technology Co., Ltd.
Hefei, Anhui 231283 (CN)**

(72) Inventors:
• **ZHANG, Xiao**
  **Hefei, Anhui 231283 (CN)**
• **ZHOU, Yusong**
  **Hefei, Anhui 231283 (CN)**
• **MENG, Xiaofu**
  **Hefei, Anhui 231283 (CN)**

(74) Representative: **Huang, Liwei
Cäcilienstraße 12
40597 Düsseldorf (DE)**

(54) **METHOD FOR SPLITTING NEURAL NETWORK MODEL BY USING MULTI-CORE PROCESSOR, AND RELATED PRODUCT**

(57)    Embodiments of the present disclosure provide a method for splitting a neural network model to be processed by a multi-core processor and related products. When a splittable operator is present in the neural network model, the operator is split, and an optimal splitting combination is selected to obtain an optimal splitting result of an entire neural network model, and then sub-operators corresponding to the optimal splitting result are executed through multiple cores in parallel. Thereby, a purpose of reducing resource consumption of a computer device is achieved.

FIG. 5

EP 4 036 724 A1

## Description

### TECHNICAL FIELD

The present disclosure relates to the technical field of deep learning and especially relates to a method for splitting a neural network model to be processed by a multi-core processor, and related products.

### BACKGROUND

In recent years, neural network processors have been continuously proposed and are expanding from a single core to multiple cores like general-purpose processors. A multi-core structure after expanding may improve data throughput and accelerate training speed in a training phrase by supporting data parallelism. However, in a reasoning phrase, compared with the data throughput, deep neural networks may have higher requirements for end-to-end delay, which often determines the availability of an accelerator in a certain scenario. Traditional data parallelism solutions may not meet the requirements for acceleration and low delay in reasoning scenarios with small data scales.

### SUMMARY

In order to solve the above-mentioned technical problems, embodiments of the present disclosure provide a method for splitting a neural network model to be processed by a multi-core processor and related products.

A first aspect of the embodiments of the present disclosure provides a method for splitting a neural network model to be processed by a multi-core processor, and the method may include:

determining split state sets of tensor data associated with a target operator according to the target operator in a calculation graph corresponding to the neural network model, where the tensor data includes input tensor data and output tensor data;

traversing the split state sets and determining splitting paths of the tensor data of the target operator between adjacent split state sets and weights of the splitting paths;

determining a target splitting path of the tensor data of the target operator according to the weights of the splitting paths; and

splitting the tensor data of the target operator of the calculation graph according to the target splitting path to distribute the tensor data to corresponding cores of the multi-core processor for processing.

A second aspect of the embodiments of the present disclosure provides an apparatus for splitting a neural network model to be processed by a multi-core processor, and the apparatus may include:

a first determining unit configured to determine split state sets of tensor data associated with a target operator according to the target operator in a calculation graph corresponding to the neural network model, where the tensor data includes input tensor data and output tensor data;

a traversing unit configured to traverse the split state sets and determine splitting paths of the tensor data of the target operator between adjacent split state sets and weights of the splitting paths;

a second determining unit configured to determine a target splitting path of the tensor data of the target operator according to the weights of the splitting paths; and

a splitting unit configured to split the tensor data of the target operator of the calculation graph according to the target splitting path to distribute the tensor data to corresponding cores of the multi-core processor for processing.

A third aspect of the embodiments of the present disclosure provides a chip including the neural network model processing apparatus of the second aspect.

A fourth aspect of the embodiments of the present disclosure provides a computer device including the chip of the third aspect or the neural network model processing apparatus of the second aspect.

A fifth aspect of the embodiments of the present disclosure provides a computer device including processors and a memory that are connected to each other, where the processors include a general-purpose processor and an artificial intelligence processor, and the memory is configured to store a computer program that supports the computer device to perform the method above, and the computer program includes a program instruction, and the processors are configured to invoke the program instruction to perform the method of the first aspect.

A sixth aspect of the embodiments of the present disclosure provides a computer-readable storage medium, on which a computer program is stored, where the computer program includes a program instruction, and the program instruction enables a processor to perform the method of the first aspect when the program instruction is executed by the processor.

A seventh aspect of the embodiments of the present disclosure provides a computer program product, where the computer program product includes a non-transitory computer-readable storage medium that stores a computer program, and the computer program is executed to enable a computer to perform some or all of steps of the method of the first aspect of the embodiments of the present disclosure. The computer program product may be a software installation package.

By implementing the embodiments of the present disclosure, the computer device may obtain the split state sets corresponding to the tensor data by splitting the tensor data associated with the target operator in the calculation graph corresponding to the neural network model, and then the computer device may determine the splitting paths of the tensor data between the adjacent split state sets and the weights of the splitting paths and determine the target splitting path of the tensor data of the target operator, and finally the computer device may split the tensor data of the target operator of the calculation graph according to the target splitting path to distribute the tensor data to the corresponding cores of the multi-core processor for processing. In this process, by splitting the tensor data associated with the target operator, a purpose of reducing a computational data scale of the operator may be achieved, and then according to a selection of a splitting path between split states corresponding to the tensor data, a splitting method of the tensor data may be further optimized. Finally, by distributing the tensor data obtained by splitting to the multi-core processor, hardware resources of each core in the multi-core processor may be effectively utilized. This solution may effectively reduce the end-to-end delay of various neural network models on the multi-core processor.

## BRIEF DESCRIPTION OF THE DRAWINGS

In order to illustrate technical solutions in the embodiments of the present disclosure more clearly, drawings required to be used in the description of the embodiments are briefly explained below. Obviously, the drawings in the description below are some embodiments of the present disclosure. Other drawings may be obtained according to the disclosed drawings without any creative effort by those skilled in the art.

FIG. 1A is a schematic structural diagram of a software stack for an artificial intelligence processor.
FIG. 1B is a schematic diagram of operator splitting based on a calculation graph, according to an embodiment of the present disclosure.
FIGs. 1C to 1H are schematic diagrams illustrating a convolutional operator splitting method in the case that a degree of parallelism is 2, according to embodiments of the present disclosure.
FIG. 2 is a schematic structural diagram of a computer device, according to an embodiment of the present disclosure.
FIG. 3 is a flowchart diagram of a method for splitting a neural network model to be processed by a multi-core processor, according to an embodiment of the present disclosure.
FIG. 4 is a schematic diagram of an operator connection relationship in a neural network model, according to an embodiment of the present disclosure.
FIG. 5 is a splitting diagram of a convolutional operator, according to an embodiment of the present disclosure.
FIG. 6 is a schematic diagram of a split state set, according to an embodiment of the present disclosure.
FIG. 7 is a schematic diagram of a splitting path between split states, according to an embodiment of the present disclosure.
FIG. 8 is a schematic diagram of a residual block in a deep residual network, according to an embodiment of the present disclosure.
FIG. 9 is a schematic structural diagram of an apparatus for splitting a neural network model to be processed by a multi-core processor, according to an embodiment of the present disclosure.

## DETAILED DESCRIPTION OF THE EMBODIMENTS

Technical solutions in embodiments of the present disclosure will be described hereinafter with reference to drawings.

It should be understood that terms such as "first", "second", and "third" appear in the claims, the specification, and drawings are used for distinguishing different objects rather than describing a specific order. It should be understood that terms "including" and "comprising" used in the specification and the claims indicate the presence of a feature, an entity, a step, an operation, an element, and/or a component, but do not exclude the existence or addition of one or more other features, entities, steps, operations, elements, components, and/or collections thereof.

It should also be understood that terms used in the specification of the present disclosure are merely intended to describe specific embodiments rather than to limit the present disclosure. As being used in the specification and the claims of the disclosure, unless the context clearly indicates otherwise, the singular forms "a", "an", and "the" are intended to include the plural forms. It should also be understood that a term "and/or" used in the specification and the claims refers to any and all possible combinations of one or more of relevant listed items and includes these combinations.

In order to better understand the technical solutions of the present disclosure, technical terms involved in the embodiments of the present disclosure are explained first hereinafter.

(1) Tensor

In the technical solutions of the present disclosure, a tensor is only a feature description of one piece of data stored, and the tensor records information such as the shape and type of the data.

In the embodiments of the present disclosure, the tensor should be understood as tensor data, including input tensor data and output tensor data in a neural network model as well as feature tensor data.

Taking an artificial intelligence deep learning framework TensorFlow as an example, terms such as rank, shape and dimension number are generally used to describe dimensions of the tensor, and their relationships may be represented by the following Table 1.

Table 1

| Rank | Shape | Dimension number | Example |
|------|-------|------------------|---------|
| 0 | [] | 0-D | 4 |
| 1 | [D1] | 1-D | [2] |
| 2 | [D1, D2] | 2-D | [6, 2] |
| 3 | [D1, D2, D3] | 3-D | [7, 3, 2] |
| n | [D1, D2, D3, ..., Dn] | n-D | Tensor with the shape of [D1, D2, D3, ..., Dn] |

As shown in Table 1, a tensor A is equal to 4, which represents a number. The tensor A is equal to [6, 2], which represents a two-dimensional matrix. Specifically, the matrix is a matrix with 6 rows and 2 columns.

(2) Data parallelism

Specifically, data parallelism refers to dividing data into several blocks to be mapped to different processors, where each processor runs a same processing program to process data distributed. In the prior art, most of parallel processing adopt this processing method, especially for a problem with high computational complexity, such as a hydromechanics calculation, image processing, and the like.

In the embodiments of the present disclosure, the data parallelism may be applied to large-scale neural network parallel trainings. Specifically, the core of the data parallelism is to use a plurality of processors to train a same neural network model simultaneously. In each iteration of training, each processor may obtain data to be used in this iteration from a dataset, and a round of reasoning and training calculation of an entire network may be completed on each processor, and gradient data obtained in this iteration may be obtained to update the model. After a server for maintaining weights receives gradients of all processors, these gradients may be used to update data of the model. Clearly, since the plurality of processors may perform training tasks in parallel, which means that a larger batch of data may be processed in each iteration, time required by a system to complete the training tasks may be reduced. Therefore, the key of the data parallelism lies in a batch size of data to be processed in each iteration; in other words, if the batch size of the data to be processed is larger, the data is divided into more processors for processing in parallel.

(3) Model parallelism

In the embodiments of the present disclosure, model parallelism is another neural network parallel calculation mode in addition to data parallelism. In short, the model parallelism refers to distributing calculation loads to different processors by dividing neural network model parameters.

(4) Multi-core processor

The most common structure currently used in multi-core processors is a multi-core structure based on a shared memory. A multi-core processor may include a plurality of computing cores, and each computing core may include an independent caching unit, a register file, a computing unit and an instruction control unit, and all computing cores may share a same global memory.

In the prior art, a single core is sufficient for any calculation task with complex logic, but the performance of processors with the single core is limited by Moore's Law and chip technologies. In order to further improve the performance of the processors, the plurality of computing cores may be introduced into the processors. The plurality of computing cores may be used to process those calculation tasks with a high degree of parallelism.

In practical applications, the multi-core structure based on the shared memory is a classical multi-core structure and is very suitable for a neural network training method that adopts data parallelism. Each core may be used as one processor in the data parallelism and may read different pieces of data respectively and then may complete forward and backward calculations of the network model in parallel. Each core may maintain a good performance power ratio under a previous single-core structure in a calculation phrase, and at the same time, throughput of an entire system may also increase with an expansion of core number.

(5) Operator splitting

In the embodiments of the present disclosure, a method of operator splitting may be used to implement a division of calculation tasks; in other words, a single operator may be split into several sub-operators that may be executed in parallel. It is required to be noted that here, both an original operator before the splitting and several sub-operators after the splitting are operators supported by an artificial intelligence processor, and original tensor data is divided into several pieces of new sub-tensor data with the operator splitting. Corresponding to a calculation graph, an original calculation graph containing a single operator may be divided into a calculation graph containing more operators that may be executed in parallel. Through this implementation, a task division within operators similar to model parallelism may be realized, and at the same time, it is ensured that each sub-operator after the splitting may reuse instruction implementations of the operators under a single-core structure for calculations, which may avoid reconstruction of the instruction implementations of original operators.

In the embodiments of the present disclosure, not entirely limited to split model parameters, the operator splitting may also adopt a method of data parallelism to split data, which actually blurs a boundary between model parallelism and data parallelism. Taking a convolutional operator as an example, if input data and weights of the convolutional operator are used as equivalent low-level tensor data in the calculation graph, for the data parallelism, a division of calculation loads is based on the splitting of the input data, while for the model parallelism, the division of the calculation loads is based on the splitting of the weights. Both the two realize the division of the calculation loads by splitting tensor data associated with the convolutional operator. From this perspective, the data parallelism and the model parallelism are unified.

(6) Artificial intelligence processor

An artificial intelligence processor is also called a dedicated processor. In the embodiments of the present disclosure, the artificial intelligence processor refers to a processor specialized in specific applications or domains. For example, a graphics processing unit (GPU), also known as a display core, a vision processor, and a display chip, is a dedicated processor for performing image computations on a personal computer, a workstation, a game console, and some mobile devices (such as a tablet computer, a smart phone, and the like). For another example, a neural-network processing unit (NPU) is a dedicated processor for performing matrix multiplication computations in the field of artificial intelligence applications. The processor adopts a structure of "data-driven parallel calculation" and specializes in processing massive multimedia data of videos and images.

(7) Software stack for an artificial intelligence processor

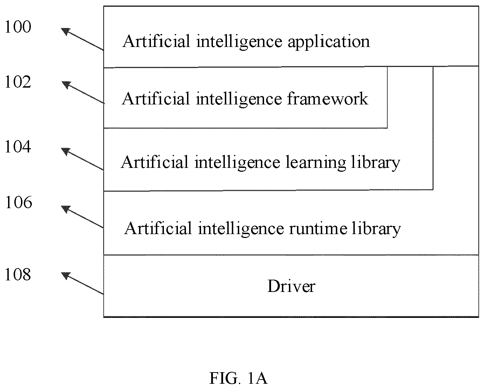

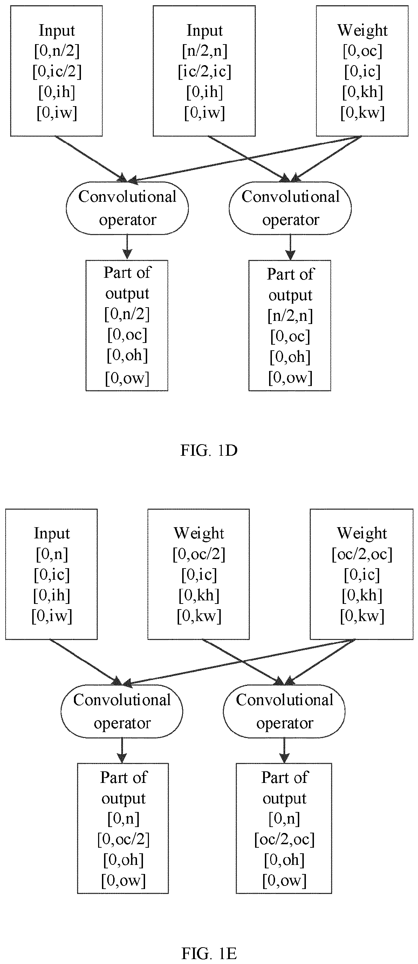

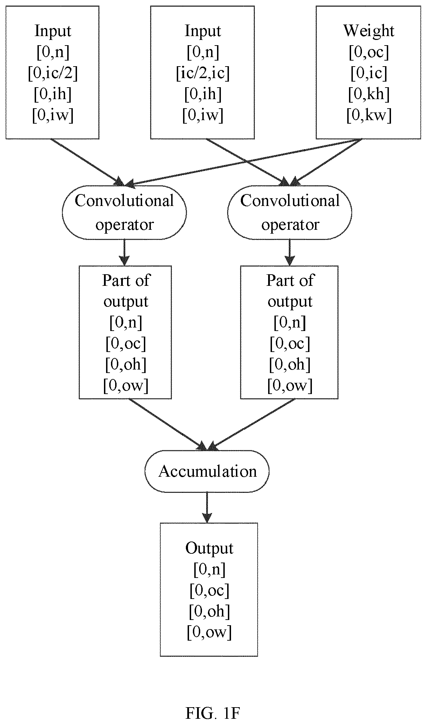

Referring to FIG. 1A, a software stack structure 10 may include an artificial intelligence application 100, an artificial intelligence framework 102, an artificial intelligence learning library 104, an artificial intelligence runtime library 106, and a driver 108. The following will explain this in detailed.

The artificial intelligence application 100 may provide artificial intelligence algorithm models corresponding to different application scenarios. The algorithm models may be directly parsed by a programming interface of the artificial intelligence framework 102. In one possible implementation thereof, the artificial intelligence algorithm models may be converted into binary instructions by invoking the artificial intelligence learning library 104, and the binary instructions may be converted into artificial intelligence learning tasks by invoking the artificial intelligence runtime library 106, and the artificial intelligence learning tasks may be placed on a task queue and then may be invoked by the driver 108 to be executed by an underlying artificial intelligence processor. In another possible implementation thereof, the artificial intelligence runtime library 106 may be directly invoked to run off-line operating files that have been previously generated to reduce intermediate overheads of a software structure and improve operating efficiency.

An artificial intelligence framework is a first layer of an entire deep learning ecosystem. Early on, in a Caffe framework, a Layer is regarded as a basic element for constructing a neural network. In later artificial intelligence frameworks, such as TensorFlow and MXNet, although another name, such as an Operator, is adopted, the core idea of the Operator is still similar to that of Layer in the Caffe framework; specifically, neural network calculations may be further divided into various common operators for tensor data, and the artificial intelligence framework may be required to embody deep learning tasks that are expressed by a calculation graph structure that is mapped by the neural network into instructions and data that may be executed on a central processing unit (CPU) or the artificial intelligence processor. In this process, the artificial intelligence framework adopts the operator as a specific element for executing calculation tasks and provides each operator with a kernel function (Kernel) that may be executed on the CPU or the artificial intelligence processor. According to the calculation graph, the artificial intelligence framework may invoke and execute the kernel function corresponding to each operator in the calculation graph and may complete the calculation tasks of the entire neural network.

In order to better understand the present disclosure, research ideas of the technical solutions of the present disclosure will be explained in detail hereinafter.

In the prior art, the problem of the data parallelism is that scalability of the data parallelism depends on a batch size of data to be processed. Although this is usually not a problem in a training phrase, this premise is difficult to be guaranteed in a reasoning phrase. Generally speaking, for a neural network model for real-time services (including video surveillance, autonomous driving, and the like), the data to be processed is usually input serially in the form of stream, resulting in a small data scale or even a single picture for each processing. In this case, the data parallelism does not provide any degree of parallelism, and all work tasks are concentrated on one single core, which makes calculation resources brought by multiple cores may not be translated into the speed of processing tasks.

After the training of the neural network model is completed by using the dataset offline, the model may be deployed in a cloud server to process data from the outside world. At this time, the application scenario may change from an offline training to an online reasoning. In an online reasoning phrase, a very important index is a delay, for example, time that the server receives the data to be processed and then returns processed results, further, time of using the neural network model to process data. A low delay may ensure that a cloud server may respond to the data from a client terminal within the shortest time, and in some more sensitive scenarios, the low delay may directly determine whether a solution may be applied. Therefore, in the online reasoning phrase, a requirement for the artificial intelligence processor may change from processing a large batch of data with high throughput to processing a small batch of data with the low delay.

In this case, traditional data parallelism or model parallelism is difficult to effectively reduce a delay of processing reasoning tasks. For the data parallelism, a large batch of data is a premise, which is inconsistent with a requirement of online reasoning for a small batch of data. For the model parallelism, the model parallelism may usually be a method to solve the problem that a large-scale neural network model exceeds a memory limit of a single device, and distributing the operator to different cores may not reduce the delay of the network. In order to really reduce the delay of processing reasoning tasks on the multi-core artificial intelligence processor, it is necessary to find a method of reasonably distributing a reasoning and calculation task of the small batch of data or even a single piece of data to each core of the multi-core structure to ensure that as many cores as possible participate in the calculation at every time to make full use of resources of the multi-core structure. One method is to split the calculation task of each operator in the neural network into the multiple cores for calculations. This method may ensure that there are multiple cores participating in the calculation at every time even when a reasoning task of a single picture is processed, thereby achieving a purpose of using multi-core resources to reduce the delay.

However, for the multi-core artificial intelligence processor, there are still many problems to be solved. First, a deep learning artificial intelligence processor may customize its own hardware design to adapt data parallel characteristics of a deep learning algorithm itself and to improve calculation throughput, and the artificial intelligence processor often requires a sufficient data scale to achieve high calculation efficiency. However, a further splitting within the operator may reduce a calculation scale of each core. When the splitting reaches a certain degree of granularity, on each core, a loss of calculation efficiency may exceed a benefit brought by increasing the degree of parallelism through the splitting. Therefore, between splitting parallelism and the calculation efficiency, a sufficient degree of parallelism is required to be provided while sufficient calculation efficiency is ensured.

Moreover, the neural network model may be regarded as a complex calculation graph often consisting of hundreds or even thousands of operators. Different kinds of operators have different algorithmic logic, which leads to different methods of splitting these operators. In addition to balancing the calculation efficiency and the degree of parallelism, for the splitting of each operator, a match between an operator in the front and an operator in the back also should be taken into consideration, and even overall impact of the splitting should also be taken into consideration. More and more large-scale complex networks have been brought by the quick development of deep learning. It is not practical to find a good parallel method manually. Therefore, an automated method is required to ensure that good splitting and parallel strategies may be given for different networks.

Additionally, portability to the underlying artificial intelligence processor may also be taken into consideration.

For an artificial intelligence processor that lacks enough good programmability, workloads of modifying the software stack brought by the expansion from the single core to the multiple cores and the realization of the splitting parallelism within the operator are extremely heavy. Since traditional implementations of the data parallelism and the model parallelism are still based on an idea that one processing core completes calculation tasks of one operator, there are not a lot of extra workloads. However, cross-core parallelism of a single operator requires modifying the implementation of the operator itself, and difficulty of this modification depends on both programmability of the artificial intelligence processor and complexity of original operator implementation logic. Therefore, how to reduce the extra overheads brought by implementing a low-delay reasoning process on the multi-core structure and reduce dependency of the workloads on the programmability of the artificial intelligence processor itself in the implementation process to make the method be universal to different multi-core artificial intelligence processors in the future may also be taken into consideration.

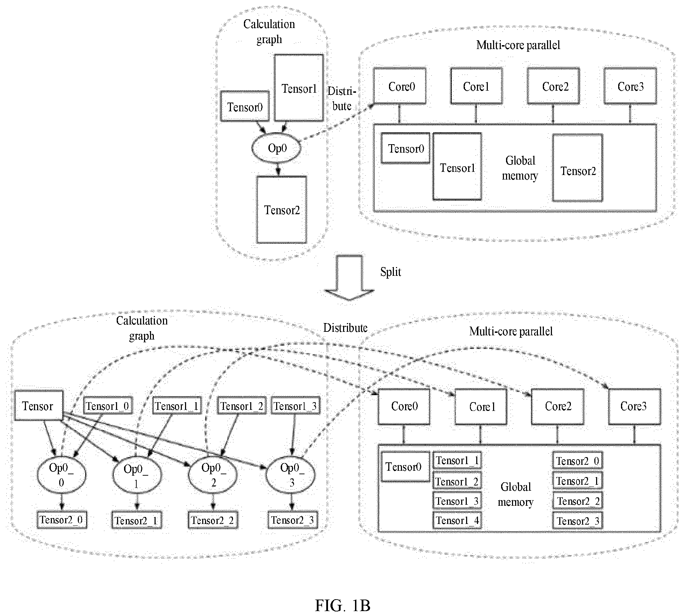

Based on the description above, the method of the operator splitting may be used to implement the division of the calculation tasks; in other words, the single operator may be split to several sub-operators that may be executed in parallel. Both the original operator before the splitting and the several sub-operators after the splitting are operators supported by a deep learning processor and original tensor data is divided into several pieces of new sub-tensor data with the operator splitting. As shown in FIG. 1B, FIG. 1B is a schematic diagram of operator splitting based on a calculation graph, according to an embodiment of the present disclosure. In FIG.1B, an operator Op0 is converted from being executed on a single core Core0 to being executed on multiple cores including a Core0, a Core1, a Core2, and a Core3 in parallel through the operator splitting.

The operator splitting may imply information about how to split tensor data associated with the operator. The tensor data associated with the operator may include both input tensor data and output tensor data of the operator. For example, in FIG.1B, the operator Op0 is split into four sub-operators, including an Op0_0, an Op0_1, an Op0_2, and an Op0_3, a computational operational type of the operator Op0 is the same as those of the Op0_0, the Op0_1, the Op0_2 and the Op0_3. Then, input tensor data Tensor 1 of the operator Op0 is accordingly split into a Tensor1_0, a Tensor1_1, a Tensor1_2, and a Tensor1_3. Through this way, a task division within the operator may be implemented, and at the same time, it is ensured that each sub-operator after the splitting may reuse instruction implementations of the operator under a single-core structure for calculations, which may avoid reconstruction of the instruction implementations of an original operator; in other words, formats of computational operational instructions of the sub-operators including the Op0_0, the Op0_1, the Op0_2 and the Op0_3 are the same as that of the operator Op0.

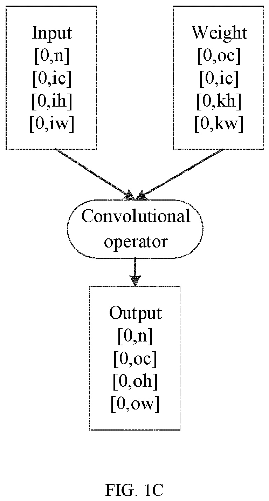

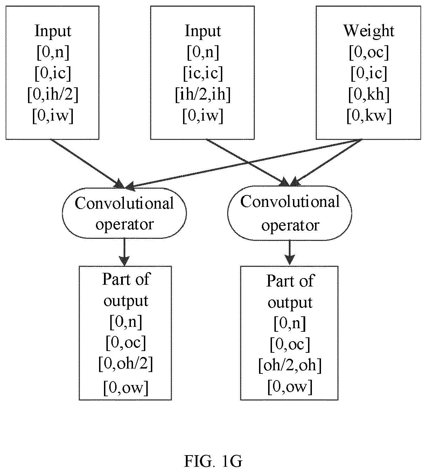

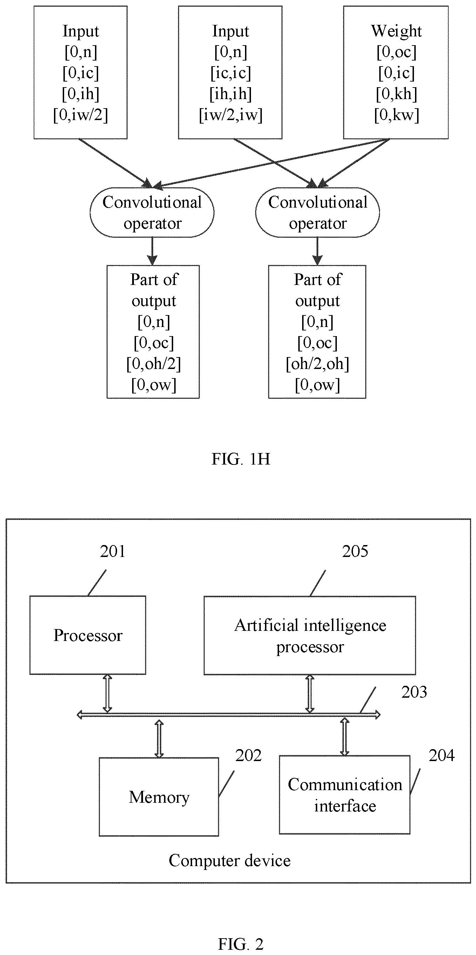

FIGs. 1C to 1H illustrate a plurality of splitting methods of a convolutional operator in a calculation graph in the case that a degree of parallelism is 2. In FIGs. 1C to 1H, for each piece of tensor data, starting points and ending points of each dimension are given, which are used to clarify a relationship between the sub-tensor data after the splitting and the original tensor data. In the figures, terms such as n, ic, ih, iw, oc, oh, ow, kh and kw represent a batch size of input tensor data, a count of input tensor data feature maps, a length of input tensor data feature maps, and a width of input tensor data feature maps, a count of output tensor data feature maps, a length of output tensor data feature maps, and a width of output tensor data feature maps, a length of a convolution kernel window, and a width of a convolution kernel window successively. Specifically, FIG. 1C is an original calculation graph; FIG. ID illustrates splitting based on a N dimension of input tensor data; FIG. IE illustrates splitting based on a C dimension of output tensor data; FIG. IF illustrates splitting based on a C dimension of input tensor data; FIG. 1G illustrates splitting based on a H dimension of input tensor data; and FIG. 1H illustrates splitting based on a W dimension of input tensor data. These splitting methods may be performed on different dimensions and at the same time may be combined with each other to form more new splitting methods, so as to provide a sufficient degree of parallelism to utilize resources of the multi-core processor and simultaneously avoid an influence of an excessive splitting on a single dimension on the calculation efficiency to some extent.

Referring to FIG. 2, FIG. 2 is a schematic structural diagram of a computer device, according to an embodiment of the present disclosure. As shown in FIG. 2, a computer device 20 may include a general-purpose processor 201, a memory 202, a communication bus 203, a communication interface 204, and at least one artificial intelligence processor 205, where the general-purpose processor 201 and the artificial intelligence processor 205 are connected with the memory 202 and the communication interface 204 through the communication bus.

The general-purpose processor 201 may be a central processing unit (CPU), other general-purpose processors, a digital signal processor (DSP), an application-specific integrated circuit (ASIC), a field-programmable gate array (FPGA), or other programmable logic components, discrete gate or transistor logic components, discrete hardware components, and the like. The general-purpose processor 201 may be a microprocessor or any conventional processor.

The general-purpose processor 201 may also be an integrated circuit chip with signal processing capability. In an implementation process, each step of the operator splitting method of the present disclosure may be completed by instructions in the form of hardware such as an integrated logic circuit or in the form of software in the general-purpose processor 201.

The memory 202 may be a read-only memory (ROM), a random access memory (RAM), or other memories. In the embodiments of the present disclosure, the memory 202 may be configured to store data and various software programs, for example, in the embodiments of the present disclosure, a program for optimizing the neural network model according to positional relationships of glue operators.

Optionally, in the embodiments of the present disclosure, the memory may include a physical apparatus for storing information, where the information is generally digitized and then stored by using electrical, magnetic, or optical media. The memory of the embodiment may further include: apparatuses for storing information by using an electrical method, such as the RAM, the ROM, and the like; apparatuses for storing information by using a magnetic method, such as a hard disk, a floppy disk, a magnetic tape, a magnetic core memory, a magnetic bubble memory, and a USB flash disk; and apparatuses for storing information by using an optical method, such as a compact disc (CD) or a digital versatile disc (DVD). Of course, the memory may also include memories that use other methods, such as a quantum memory, a graphene memory, and the like.

The communication interface 204 may use, for example, a receiver-transmitter apparatus, such as a transceiver, which is not limited, to implement communication between the computer device 20 and other devices or communication networks. For example, the communication interface 204 may be used to receive a model file sent by other devices.

The artificial intelligence processor 205 may be mounted on a host CPU as a co-processor, where the host CPU distributes tasks to the artificial intelligence processor 205. In practical applications, the artificial intelligence processor 205 may perform one or more kinds of computations. Taking a network processing unit (NPU) as an example, a core part of the NPU is a computation circuit, and the computation circuit is controlled by a controller to extract matrix data in the memory 202 and perform multiplication and addition computations on the matrix data.

Optionally, the artificial intelligence processor 205 may include 8 clusters, and each cluster may include 4 artificial intelligence processor cores.

Optionally, the artificial intelligence processor 205 may be an artificial intelligence processor with a reconfigurable structure. Here, the reconfigurable structure means that if the artificial intelligence processor may use reusable hardwareresources and flexibly change its own structure according to different application requirements to provide a matched structure for each specific application requirement, the artificial intelligence processor is called a reconfigurable computing system, and its structure is called the reconfigurable structure.

It should be understood that the computer device 20 is merely one example of the embodiments of the present disclosure, and the computer device 20 may have more or fewer components than the components shown and may combine two or more components, or may have different implementations of components.

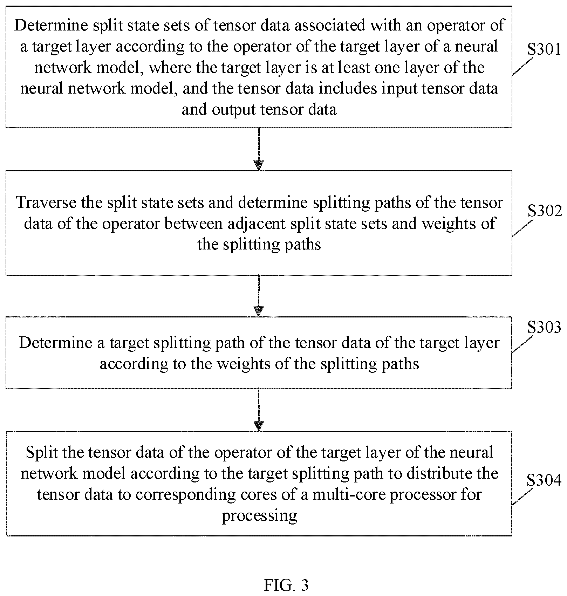

In combination with a flowchart of a method for splitting a neural network model to be processed by a multi-core processor according to an embodiment of the present disclosure shown in FIG. 3, how to represent a splitting method of a target operator by splitting input tensor data of the target operator to further achieve a purpose of optimizing an core computation process of an artificial intelligence processor in the embodiments of the present disclosure will be described in detailed hereinafter. Taking a Caffe as an example, a detailed description will be made with reference to drawings. The description includes but is not limited to the following steps.

In a step 301, split state sets of tensor data associated with the target operator may be determined according to the target operator in a calculation graph corresponding to the neural network model.

Under a Caffe framework, the target operator may be a corresponding target layer in the neural network model. The target layer is at least one layer in the neural network model. The tensor data may include the input tensor data and output tensor data.

In the embodiments of the present application, "the neural network model" is also referred as a model, such as "a first neural network model", "a second neural network model" or "a third neural network model". The model may receive input data and generate a predictive output according to the input data received and current model parameters. In practical applications, the predictive output may include an image detection output result, a semantic analysis output result, an image classification output result, and the like. The neural network model may include a deep neural network (DNN) model, a convolutional neural network (CNN) model, an extreme learning machine (ELM) model, or other neural network models.

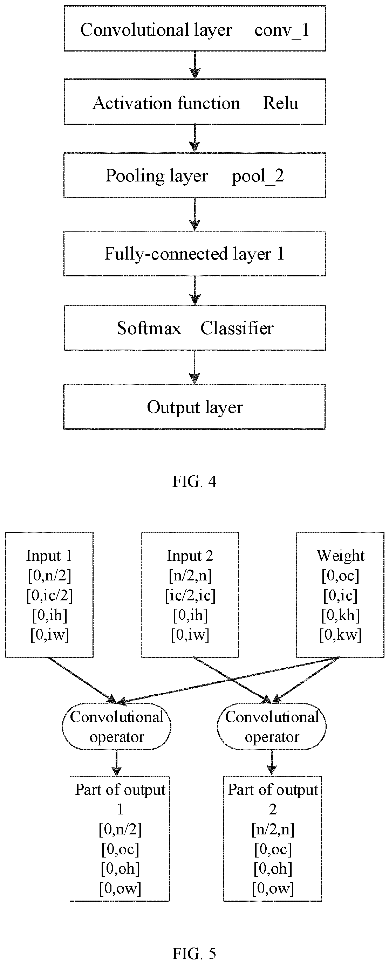

Under the Caffe framework, the neural network model has a hierarchical structure. As shown in FIG. 4, FIG. 4 is a schematic diagram of an operator connection relationship in a neural network model, according to an embodiment of the present disclosure. The neural network model may include a convolutional layer Conv, an activation function layer Relu, a pooling layer Pool, a classifier Softmax, and a fully-connected layer, where each layer corresponds to at least one operator. Splitting methods of only tensor data associated with the operator correspond to splitting methods of the operator itself. Referring to FIG. 5, FIG. 5 is a splitting diagram of a convolutional operator, according to an embodiment of the present disclosure. As shown in FIG. 5, input tensor data of a convolutional operator Conv may include an input scale Input and a weight Weight. For the input tensor data such as Input {[0, n], [0, ic] [0, ih], [0, iw]}, n represents a batch size of input data; ic represents the data amount of input data feature map; ih represents the length of input data feature map; and iw represents the width of input data feature map. The input tensor data may be split on n dimension, and input sub-tensor data including an Input 1 {[0, n/2], [0, ic/2] [0, ih), [0, iw]} and an Input 2 {[n/2, n), [ic/2, ic) [0, ih), [0, iw]} may be obtained. All sub-tensor data obtained by splitting the tensor data according to one method may be referred as a kind of split state s of the tensor data, and all possible states of the tensor data may constitute a state space S of the tensor data. Assuming that in a neural network model, an operator Op is split according to a certain splitting method, its input data Tensor0 may have a state s and its output data Tensor1 may have a state t, where the state s belong to a split state space S of the Tensor0 and the state t belong to a split state space T of the Tensor1. Based on this, a splitting method of the Op itself may be considered a directed edge from s to t. For example, (Input 1, Input 2) is one kind of split state s. Assuming that output sub-tensor data of the Conv in FIG. 5 includes Partial1{[0,n/2), [0, oc) [0,oh), [0,ow)} and Partial2{[n/2,n), [0,oc) [0,oh), [0,ow)}, and (Partial1, Partial2) is one kind of split state t, then, a splitting method of the Conv itself may be considered the directed edge from s to t.

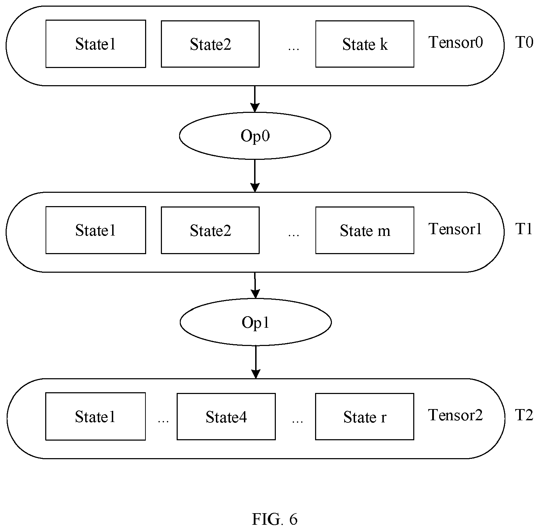

Theoretically, the tensor data associated with the operator may be split according to any one method that may be executed by the operator. However, in an actual neural network model, the tensor data may often be associated with a plurality of operators. Referring to FIG. 6, FIG. 6 is a schematic diagram of a split state set, according to an embodiment of the present disclosure. As shown in FIG. 6, tensor data Tensor1 is both output tensor data of an operator Op0 and input tensor data of an operator Op1. After the Op0 is determined to be split according to a certain method, as an output of the Op0, the Tensor1 is also determined to be split into a series of pieces of sub-tensor data according to the certain method. Then, if the Op1 selects its splitting method, it must be ensured that a selected method is compatible with a determined splitting method of input tensor data Tensor1, which constrains a selection range of the Op1. Further, the splitting method selected by the Op1 under this constraint may constrain the splitting selection of other adjacent operators through the tensor data associated with them.

In an optional embodiment, split states in split state sets of input tensor data of a target operator in a calculation graph corresponding to a neural network model may be determined according to a computational logic of the target operator and split states in split state sets of corresponding output tensor data.

The splitting method that the operator may support depends on the computational logic of the operator itself and the data scale of the operator itself. The splitting method of the operator may include the following types: (1) the operator supports to be split on any dimension; (2) the operator supports to be split on limited dimensions; (3) the operator does not support to be split. For example, for ReLu operators and Conv operators, according to the splitting method that is supported by them, their input data may be allowed to be split on any dimension of NCHW (which includes a batch size of input data, a count of feature maps, a length of feature maps, and a width of feature maps); for some operators, such as Softmax operators, according to the splitting method that is supported by them, their input data may only be allowed to be split on certain specific dimensions; and for some operators that are extremely complex in implementations, such as non-maximum suppression (NMS) operators, it is hard to distribute calculation loads to multiple cores to be executed in parallel through a method of splitting the operators. Therefore, such operators may be executed on a single core ultimately and their corresponding input data may remain intact without being split. There are three kinds of results of the mutual influence of the splitting methods between multilayer operators: (1) full support; (2) partial support; (3) nonsupport. If two operators that are connected to each other support to be split on any dimension, then, previous splitting methods of the two operators are fully supported with each other, and split state sets of the tensor data corresponding to the two operators may be obtained by splitting on any dimension. If one of the two operators that are connected to each other supports to be split on any dimension and the other does not support to be split or only supports to be split on limited dimensions, then, the splitting methods of the two operators are partially supported with each other, and it is required to calculate an intersection of possible state split sets of the tensor data of the two operators to obtain final state split sets corresponding to the operators. Or, if one of the two operators that are connected to each other supports to be split on limited dimensions and the other does not support to be split, or both the two operators do not support to be split, then, the splitting methods of the two operators are not supported with each other, and the tensor data of the two operators may not be split, and split states in corresponding split state sets are only split states corresponding to original tensor data.

For the operator, in the case that split states in split state sets of corresponding output tensor data have been determined, split states in split state sets of input tensor data may be determined according to the computational logic of the operator and the split states in the split state sets of the corresponding output tensor data. For example, in FIG. 6, split states in a split state set T0 of the input tensor data of the Op0 may be determined according to the computational logic of the Op0 and the split states in a split state set T1 of the corresponding output tensor data. Assuming that the Op1 is the operator that only supports to be split on limited dimensions and corresponding limited split states of the T1 have been determined and the Op0 is the operator that supports to be split on any dimension, the split states in the T0 may be obtained by calculating the intersection of all split states of the T1 and the Op0.

In an optional embodiment, the split states in the split state sets of the output tensor data of the target operator in the calculation graph corresponding to the neural network model may be determined according to the computational logic of the target operator and the split states in the split state sets of the corresponding input tensor data.

Similarly, in the case that the split states in the split state sets of the input tensor data of the operator have been determined, the split states in the split state sets of the output tensor data may be determined according to the computational logic of the operator and the split states in the split state sets of the corresponding input tensor data. For example, in FIG. 6, in the case that the split states in the split state set T1 of the input tensor data of the Op1 have been determined, split states in a split state set T2 may be determined according to the computational logic of the Op1 and the split states in the split state set T1. Assuming that the Op1 is the operator that only supports to be split on limited dimensions and the corresponding limited split states of the T1 have been determined, the split states in the T2 are the split states obtained by being split on limited dimensions corresponding to the split states in the T1.

In a step 302, the split state sets may be traversed, and splitting paths of tensor data of a target operator between adjacent split state sets and weights of the splitting paths may be determined.

After the split state sets corresponding to the tensor data associated with the target operator are obtained, the split state sets may be traversed and the splitting paths between the adjacent split state sets may be determined, where a path represents an intermediate process from the input tensor data to the output tensor data, while the splitting path represents an intermediate process from one split state to another split state between the adjacent split state sets.

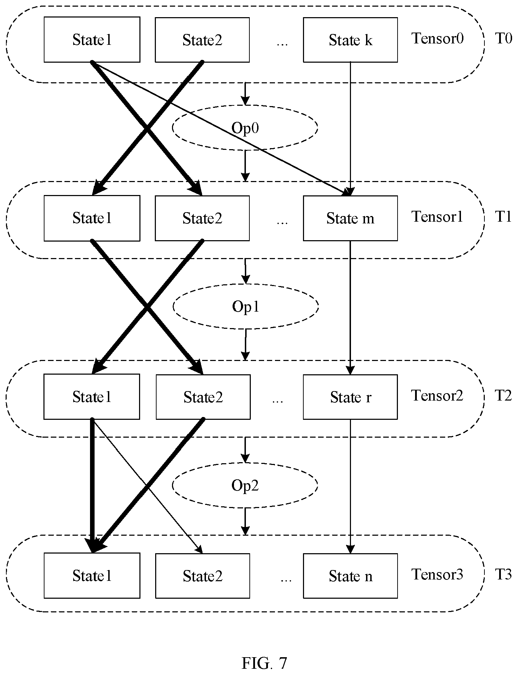

Referring to FIG. 7, FIG. 7 is a schematic diagram of a splitting path between split states, according to an embodiment of the present disclosure. As shown in FIG. 7, there exist directed edges between split states in split state sets of tensor data associated with a target operator. For example, between a split state set T1 and a split state set T2 that correspond to an operator Op1, there exists a directed edge from T1: State 1 to T2: State2, where the directed edge may have two meanings: one represents a connection relationship between operators; another one represents an execution sequence of an artificial intelligence processor in executing a neural network model. A first meaning shows that if there is a directed edge between split states, then there is a connection relationship between operators corresponding to the split states, where the operators with the connection relationship are adjacent and are connected to each other. A second meaning shows that if there is the directed edge between the split states, then the direction to which the directed edge points corresponds to the execution sequence of the operators of the neural network model on the processor.

In FIG. 7, each dashed box represents a split state set of each piece of tensor data, which includes several split states, where the split states come from a split state space of the tensor data. Each directed edge between split states in a split state set of input tensor data of an operator and split states in a split state set of output tensor data of the operator represents a splitting method of the operator itself, and parallel execution time based on this splitting method may be used as a weight of the directed edge. A Tensor0 is the input tensor data of an entire network, and a Tensor3 is the output tensor data of the entire network. Any one path that starts from any one state in a state set of the Tensor0 and ends with any one state in a state set of theTensor3 corresponds to one effective splitting solution of the neural network, which is denoted as a P. For a given neural network model, searching for a good splitting solution is to find a target path from states of the Tensor0 to states of the Tensor3 in FIG. 7.

In this technical solution, the directed edge between the split states has the weight; in other words, it is the weight of the splitting path. The weight of each splitting path is based on a computational operational method of the operator and the parallel execution time of corresponding split sub-tensor data on the neural network multi-core processor. In a process of determining the time, on the one hand, a scale of the operator itself should be considered, and on the other hand, a plurality of hardware parameters including a memory access bandwidth and frequency of a computation unit should be considered. There is basically no conditional jump in operators of the neural network model, and a calculation amount of the neural network model is determined on the premise that scales of the operators are given. Additionally, because of the symmetry of sub-operators that are obtained through splitting and are executed on each core, an equal division method may be used to evaluate the memory access bandwidth obtained by each core in the process of accessing a global memory under multi-core parallel execution. Therefore, the weight of the splitting path is determined according to a computational operational type of the operator corresponding to the splitting path, a data scale of corresponding sub-data obtained by the tensor data of the operator through the splitting path, and a throughput rate and the memory access bandwidth of each processor core.

In practice, in order to ensure the accuracy of the weight of the splitting path, an actual testing method may also be used to obtain execution time of the operator under various splitting parallels. This may also be done because the execution of the operator itself is determined. Once actual time for a certain operator to be split in parallel according to a certain method under a certain data scale is planed and stored, a value of the actual time may be used to represent the weight of the splitting path corresponding to the splitting method of the certain operator with the certain data scale.

When the artificial intelligence processor invokes the operator for computations, there will be corresponding resource consumption. The amount of the resource consumption is concerned with the computational operational type of the operator, the data scale of the sub-data obtained by the tensor data of the operator through the splitting path and the throughput rate and the memory access bandwidth of each processor core. Therefore, in order to optimize computational efficiency of the artificial intelligence processor, the directed edge corresponding to a weight representing the smaller amount of the resource consumption may be selected.

In a step 303, a target splitting path of the tensor data of the target operator may be determined according to weights of splitting paths.

After determining splitting paths of the tensor data of the target operator between adjacent split state sets, for splitting paths of the tensor data of one single operator, based on a multi-layer structure of the entire neural network model, it is necessary to further obtain the splitting paths corresponding to the tensor data.

In practice, a method similar to a Viterbi algorithm may be used to find the shortest path in FIG. 7. The Viterbi algorithm is a dynamic programming algorithm used to find an implicit state sequence that is most likely to generate an observation time series. The Viterbi algorithm is widely applied to the fields of speech recognition, keyword recognition and communication decoding. The states in the split state sets of the tensor data may be regarded as implicit states in the Viterbi algorithm, and the directed edge between the split states as a transition relationship between the implicit states, and the weight of the directed edge corresponds to a logarithmic value of a transition probability between the implicit states.

In a specific implementation, first of all, all operators in the network calculation graph may be traversed from front to back. When an i-th operator is accessed and the shortest path $\left\{l_{s_i^0}, l_{s_i^1}, ..., l_{s_i^{p-1}}\right\}$ from the states in the split state set of the input tensor data of the neural network to each state in the split state set $\left\{s_i^0, s_i^1, ..., s_i^{p-1}\right\}$ of the input data of the current operator is known, by combining all directed edges corresponding to the current operator and the weight $w_{s_i^u \to s_{i+1}^v}$ of the directed edges, the shortest path $\left\{l_{s_{i+1}^0}, l_{s_{i+1}^1}, ..., l_{s_{i+1}^{q-1}}\right\}$ from the states in the split state set of the input tensor data of the neural network to each state in the split state set $\left\{s_{i+1}^0, s_{i+1}^1, ..., s_{i+1}^{q-1}\right\}$ of the output data of the current operator may be obtained. Formula (1) is a calculation formula. After a traversal of all operators is completed, the shortest paths from the states in the split state set of the input tensor data of the neural network model to each state in the split state set of the output tensor data may be obtained. Then, from these shortest paths, the shortest path may be selected again, which is the target global shortest path. Finally, by backtracking from the output tensor to the input tensor, the directed edge selected by the shortest path at each operator and the split states at each piece of tensor data may be determined, which is an optimal splitting solution that is to be found on this calculation graph.

If each operator is accessed, states in an output state set of the current operator are obtained through enumeration according to states in an input state set and calculation semantics of the operator itself. Specifically, for each split state in the split state set of the input tensor data, possible splitting methods of the current operator that are compatible with a current input state may be enumerated. The split states of the output tensor data corresponding to the possible splitting methods will be added to the split state set of the output tensor data. Some operators do not only have one piece of input tensor data. For example, both Convolution and InnerProduction may have at most three input tensors including the input data, the weight, and a bias, and both BatchNorm and Scale may also have at most three input tensors including the input data, a mean value/$\alpha$, and a variance/$\beta$. However, each operator in FIG. 7 has only one input and one output. In order to narrow down a difference between the two, in a specific implementation, split states of other input tensors, other than the input data, may be included in the directed edge of the operator. In other words, although each operator in FIG. 7 has only one input and one output, some other auxiliary tensors are implicitly included in the directed edge. This method based on the Viterbi algorithm may reduce the complexity of searching for the optimal splitting solution. Assuming that the neural network model has M layers, where the split state set of each piece of tensor data has at most N states, each operator has at most N2 different splitting methods. Taking a comparing operation on the splitting paths as a basic operation, time complexity in the case of a full traversal is O(NM), while the time complexity under the Viterbi algorithm is O(MN2); taking a count of to-be-selected splitting paths to be maintained as an evaluation criterion of space complexity, the space complexity in the case of the full traversal is O(NM), while the space complexity under the Viterbi algorithm is O(N).

$$l_{s_{i+1}^v} = \min_{u=0,...,p-1}(l_{s_i^u} + w_{s_i^u \to s_{i+1}^v})$$

$$(1).$$

In an optional embodiment, according to the weights of the splitting paths, determining the target splitting path of the tensor data of the target operator may include: traversing all split state sets of the tensor data associated with the target operator, and for a current split state set, traversing each split state thereof to obtain all directed edges directing to a current split state and splitting paths from split states corresponding to starting points of the directed edges to split states of input tensor data of the target operator; determining splitting paths from the current split state to the split states of the input tensor data of the target operator according to weights of the directed edges and weights of splitting paths from initial split states corresponding to the directed edges to the split states of the input tensor data of the target operator, where the weights of splitting paths are determined according to weights of all directed edges corresponding to the splitting paths; and after traversing all split state sets of the target operator, obtaining the target splitting path from the split state set of the input tensor data of the target operator to the split state set of the output tensor data of the target operator.

For the split state set of the target operator, all directed edges directing to the current split state may be obtained by traversing. For example, as shown in FIG. 7, if the target operator is Op2, the split state sets of the tensor data associated with the Op2 may include a T2 and a T3. Assuming that the current split state set is the T3, after each split state in the T3 is traversed, the directed edges directing to the current split state may be obtained. Assuming that the current split state is T3: State1, there are two directed edges directing to the current split state, including T2: State1→T3: State1 and T2: State2→T3: State1, and then the splitting paths from the the split states corresponding to the starting points of the directed edges to the split states of the input tensor data of the target operator may be obtained. For T2: State1→T3: State1, a starting point is T0: State1, and a path from the starting point of the directed edge to the split states of the input tensor data of the target operator is T0: State1 →T1: State2→T2: State1. For T2: State2→T3: State1, the starting point is T0: State2, and the path from the starting point of the directed edge to the split states of the input tensor data of the target operator is T0: State2→T1: State1→T2: State2, which is a process of forward traversal.

The weights of the splitting paths may be obtained according to the weights of all directed edges included in the splitting paths, including summing the weights of all directed edges, calculating the product, weighting the sum, or calculating the integral. For example, if the weights are summed, for T0: State1→T1: State2→T2: State2, the weight of T0: State1→T1: State2 is $\omega1$, and the weight of T1: State2→T2: State2 is $\omega2$, and the weight of the splitting path is a sum of the weights of all the directed edges in the splitting path, which is $\omega11=\omega1+\omega2$.

For the current split state T3: State1, assuming that the weight of State1→T3: State1 is $\omega01$ and the weight of T2: State2→T3: State1 is $\omega02$, there are two splitting paths from the initial split states to the split states of the input tensor data of the target operator, where

the weight of T0: State 1→T1: State2→T2: State2 is $\omega11$, and
the weight of T0: State2→T1: State1→T2: State2 is $\omega12$.

There are also two splitting paths from the current split state T3: State1 to the split states of the input tensor data of the target operator, where

the weight of T0: State1→T1: State2→T2: State2→T3: State1 is $\omega21= \omega01+ \omega11$, and
the weight of T0: State2→T1: State1→T2: State2→T3: State1 is $\omega22= \omega02+ \omega12$.

After all split sets of the target operator are traversed, the target splitting path from the split state set of the input tensor data of the target operator to the split state set of the output tensor data of the target operator may be obtained. The target splitting path may be determined according to the weights of the splitting paths from the current split state to the split states of the input tensor data of the target operator. The target splitting path is one splitting path selected from a plurality of splitting paths, which may be the one with the shortest total consumption time, or the one with the least total occupation of memory, or the one with the largest throughput. Corresponding to the splitting path, the one with the largest weight or the one with the smallest weight may be selected.

For example, for the Op2, since two splitting paths from the split state T3: State1 of corresponding split state set to the split states of the input tensor data of the target operator have been determined and the weights corresponding to the two splitting paths are $\omega21$ and $\omega22$ respectively, if the weight represents the time consumption of the operator in obtaining the output tensor data by computing according to the input tensor data and the $\omega21$ is greater than the $\omega22$, the splitting path corresponding to the $\omega22$ may be selected when the splitting path with the least time consumption is required to be selected. Similarly, for other split states in the split state set corresponding to the Op2, the splitting paths from the other split states to the split states of the input tensor data of the target operator may be obtained and for each split state, the one with the least time consumption may be selected. Then, from the splitting paths with the least time consumption corresponding to each split state, the only one with the least time consumption may be selected.

Assuming that the only splitting path with the least time consumption corresponding to the Op2 is the splitting path corresponding to the $\omega22$, in this splitting path, the target splitting path from the split state set of the input tensor data of the Op2 to the split state set of the output tensor data of the Op2 may be determined as T2: State2→T3: State1; in other words, the selection of the target splitting path corresponding to the operator is based on a weight of a global splitting path of the neural network model, rather than the weights of the directed edges between the split states in adjacent split state sets of a single operator.

In an optional embodiment, determining the target splitting path of the tensor data of a target layer may include: traversing all split state sets of the target operator, and for the current split state set, traversing each split state thereof to obtain all directed edges starting from the current split state and splitting paths from split states corresponding to ending points of the directed edges to the split states of the output tensor data of the target operator; determining the splitting paths from the current split state to the split states of the output tensor data of the target operator according to the weights of the directed edges and the weights of the splitting paths from the split states corresponding to the ending points of the directed edges to the split states of the output tensor data of the target operator, where the weights of the splitting paths are determined according to the weights of all directed edges corresponding to the splitting paths; and after traversing all split sets of the target operator, obtaining the target splitting path from the split state set of the input tensor data of the target operator to the split state set of the output tensor data of the target operator.

For the split state set of the target operator, all directed edges starting from the current split state may be obtained by traversing. Referring to FIG. 7, for example, if the target operator is Op1,the split state sets of the tensor data associated with the Op1 may include the T1 and the T2. Assuming that the current split state set is the T1, after each split state in the T1 is traversed, the directed edges starting from the current split state may be obtained. Assuming that the current split state is T1: State1, then, there is one directed edge starting from the current split state, which is T1: State1→T2: State2, and then the splitting paths from the split states corresponding to the ending points of the directed edges to the split states of the output tensor data of the target operator may be obtained. For T1: State1→T2: State2, an ending point is T3: state1, and the splitting path from the ending point of the directed edge to the split states of the output tensor data of the target operator is T2: State2→T3: State1, which is a process of backward traversal.

The weights of the splitting paths may be obtained according to the weights of all the directed edges included in the splitting paths, including summing the weights of all directed edges, calculating the product, weighting the sum, or calculating the integral. For example, if the weights are summed, for T2: State2→T3: State1, where there only includes one directed edge, the weight of the splitting path is equal to the weight of the directed edge.

For the current split state T1: State1, assuming that the weight of T1: State1→T2: State2 is ω31 and there is one splitting path from the split state corresponding to the ending point of the directed edge to the split states of the output tensor data of the target layer, which is T2: State2→T3: State1, whose corresponding weight is ω41, the splitting path from the current split state T1: State1 to the split states of the output tensor data of the target layer is T1: State1→T2: State2→T3: State1, whose corresponding weight is ω51=ω31+ω41.

After all split sets of the target operator are traversed, the target splitting path from the split state set of the input tensor data of the target operator to the split state set of the output tensor data of the target operator may be obtained.

For the Op1, after all split states in the T1 and the T2 are traversed, global splitting paths corresponding to the Op1 from the directed edges starting from the split states in T1 to the ending points of the directed edges may be obtained, and then according to weights of the global splitting paths, one of the global splitting paths may be selected as an optimal splitting path. Similarly, the meaning of the weight may include the total time consumption, the total occupancy of memory, or the throughput. Corresponding to the splitting path, the one with the largest weight or the one with the smallest weight may be selected as the optimal splitting path. A directed edge corresponding to adjacent split state sets of the Op1 may be truncated from the optimal splitting path as the target splitting path between the split state set of the input tensor data of the target operator and the split state set of the output tensor data of the target operator.

In an optional embodiment, the method may also include the following: when the output tensor data of the current operator is regarded as the input tensor data by at least two operators, or the current operator has at least two pieces of output tensor data, one split state in the split state set of the output tensor data of the current operator may be reserved, where a reserved split state is determined according to a same directed edge of the current operator.

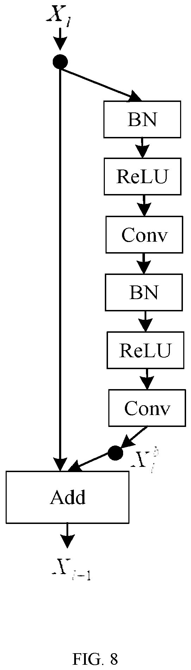

In some cases, the output tensor data of the operator is regarded as the input tensor data by at least two operators, or the current operator has at least two pieces of output tensor data. As shown in FIG. 8, FIG. 8 is a schematic diagram of a residual block in a deep residual network, according to an embodiment of the present disclosure. As shown in FIG. 8, output tensor data of an operator in the front $X_l$ is regarded as input tensor data by Add at the bottom, and simultaneously, a batch-normalized operator BN is regarded as the input tensor data. For the Add and the BN, split states that are supported by them are different. During a forward traversal, split state sets of the input tensor data of the Add and split state sets of the input tensor data of the BN may be obtained respectively. Splitting paths may be determined according to weights of directed edges during the forward traversal, and split state sets corresponding to the input tensor data that support the Add or the BN may be selected. However, during backtracking, the split state sets of the input tensor data corresponding to the Add and the split state sets of the input tensor data corresponding to output tensor data $X_l^{rb}$ may be obtained simultaneously. In order to ensure that there is no conflict in the selection of $X_l$ during the backtracking, for the split state sets of $X_l$, only one of the split states may be reserved and a reserved split state may be determined according to a same directed edge of the operator. For example, the reserved split state may be determined according to split states in a split state set whose split states direct to $X_l$ in the split state sets corresponding to the input tensor data of the operator in the front.

In an optional embodiment, the method may also include the following: if a current operator has at least two pieces of input tensor data, one split states in the split state set of the input tensor data of the current operator may be reserved and a reserved split state may be determined according to a same directed edge of the current operator.

Similarly, if the current operator has a plurality of pieces of input tensor data, each piece of tensor data has its corresponding split state sets. However, during the backtracking, a plurality of selectable split states of the current operator may be obtained. In order to ensure that there is no conflict between the split states of the input tensor data of the operator, one split state in the split state sets of the input tensor data of the operator may be reserved, and the reserved split state may be determined according to the same directed edge of the operator.

In a step 304, the tensor data of the target operator in a calculation graph may be split according to the target splitting path to distribute the tensor data to corresponding cores of a multi-core processor for processing.

The target splitting path is the splitting path corresponding to the target layer in a global optimal splitting path. Therefore, all target splitting path combinations of the neural network model may form the global optimal splitting path. The tensor data of the operator may be split according to the optimal splitting path to further obtain an optimal splitting method of the operator during the splitting.

After the tensor data of the operator is split, by invoking sub-tensor data after the splitting on the multiple core, parallel execution of the sub-operators after the splitting may be realized, which may improve execution efficiency of the neural network model. Additionally, the core number of a multi-core structure is usually an integer power of 2, for example, 1, 2, 4, 8, and 16. Since a task whose degree of parallelism is not the integer power of 2 will often generate "fragments" in core scheduling, therefore, the number of the sub-operators after the splitting should be the integer power of 2. The splitting number of the operator may be determined according to the number of sub-tensor data included in the split state. For example, (Input1, Input2) in FIG. 5 is a kind of split state s, which includes two pieces of input sub-tensor data; in other words, the operator may be split into two sub-operators.

Clearly, in the embodiments of the present disclosure, according to the target operator in the calculation graph corresponding to the neural network model, the split state sets of the tensor data associated with the target operator may be determined; the split state sets may be traversed, and the splitting paths of the tensor data of the operator between adjacent split state sets and the weights of the splitting paths may be determined; according to the weights of the splitting paths, the target splitting path of the tensor data of the target operator may be determined; according to the target splitting path, the tensor data of the target operator of the calculation graph may be split to distribute the tensor data to the corresponding cores of the multi-core processor for processing. In this way, on the one hand, through splitting operators by splitting the tensor data corresponding to the operators, modification and reconstruction of original instruction implementations of each operator may be avoided when the operators are split in parallel on the multiple cores. On the other hand, through splitting the tensor data associated with the operator, a purpose of reducing a computational data scale of the operator may be achieved, and then according to a selection of the splitting paths between the split states corresponding to the tensor data, the splitting method of the tensor data may be further optimized. Finally, by distributing the tensor data obtained by the splitting to the multi-core processor, hardware resources of each core in the multi-core processor may be effectively utilized. This solution may effectively reduce end-to-end delay of various neural network models on the multi-core processor.

It is required to be noted that for the sake of conciseness, the foregoing method embodiments are all described as a series of combinations of actions, but those skilled in the art should know that the present disclosure is not limited by the described order of action since the steps may be performed in a different order or simultaneously according to the present disclosure. Moreover, those skilled in the art should also understand that the embodiments described in the specification are all optional, and the actions and modules involved are not necessarily required for the present disclosure.

Further, it is required to be explained that although the steps in the flowchart of FIG. 3 are shown by following the direction of arrows, yet these steps may not necessarily be performed according to the order indicated by the arrows. Unless clearly stated herein, the order for performing these steps is not strictly restricted. These steps may be performed in a different order. Additionally, at least part of the steps shown in FIG. 3 may include a plurality of sub-steps or a plurality of stages. These sub-steps or stages may not necessarily be performed and completed at the same time, instead, these sub-steps or stages may be performed at different time. These sub-steps or stages may not necessarily be performed sequentially either, instead, these sub-steps or stages may be performed in turn or alternately with at least part of other steps, or sub-steps of other steps, or stages.

The foregoing describes the method of the embodiments of the present disclosure in detail. In order to facilitate better implementation of the above solutions of the embodiments of the present disclosure, correspondingly, related apparatuses for cooperating with the implementation of the foregoing solutions are also provided hereinafter.

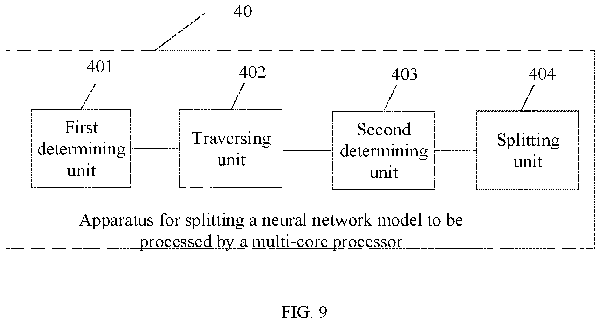

Referring to FIG. 9, FIG. 9 is a schematic structural diagram of an apparatus for splitting a neural network model to be processed by a multi-core processor, according to an embodiment of the present disclosure. An apparatus 40 may at least include:

a first determining unit 401 configured to determine split state sets of tensor data associated with a target operator according to the target operator in a calculation graph corresponding to the neural network model, where the tensor data includes input tensor data and output tensor data;

a traversing unit 402 configured to traverse the split state sets and determine splitting paths of the tensor data of the target operator between adjacent split state sets and weights of the splitting paths;
a second determining unit 403 configured to determine a target splitting path of the tensor data of the target operator according to the weights of the splitting paths; and
a splitting unit 404 configured to split the tensor data of the target operator in the calculation graph according to the target splitting path to distribute the tensor data to corresponding cores of the multi-core processor for processing.

In a possible implementation, the second determining unit 403 may be specifically configured to:

traverse the split state sets of the tensor data associated with the target operator, and for a current split state set, traverse each split state thereof to obtain all directed edges directing to a current split state and splitting paths from split states corresponding to starting points of the directed edges to split states of the input tensor data associated with the target operator;
determine splitting paths from the current split state to the split states of the input tensor data of the target operator according to weights of the directed edges and weights of splitting paths from initial split states corresponding to the directed edges to the split states of the input tensor data of the target operator, where the weights of splitting paths are determined according to weights of all directed edges corresponding to the splitting paths; and
after all split state sets of the target operator are traversed, obtain a target splitting path from a split state set of the input tensor data of the target operator to a split state set of the output tensor data of the target operator.

In a possible implementation, the second determining unit 403 may be specifically configured to:

traverse all split state sets of the target operator, and for the current split state set, traverse each split state thereof to obtain all directed edges starting from the current split state and splitting paths from split states corresponding to ending points of the directed edges to the split states of the output tensor data of the target operator;
determine splitting paths from the current split state to the split states of the output tensor data of the target operator according to the weights of the directed edges and weights of splitting paths from split states corresponding to ending points of the directed edges to the split states of the output tensor data of the target operator, where the weights of splitting paths are determined according to the weights of all directed edges corresponding to the splitting paths; and
after all split state sets of the target operator are traversed, obtain the target splitting path from the split state set of the input tensor data of the target operator to the split state set of the output tensor data of the target operator.

In a possible implementation, split states in the split state sets of the input tensor data of the target operator of the neural network model are determined according to a computational logic of the target operator and split states in the split state sets of corresponding output tensor data.
In a possible implementation, split states in the split state sets of the output tensor data of the target operator of the neural network model are determined according to the computational logic of the target operator and split states in the split state sets of corresponding input tensor data.
In a possible implementation, the second determining unit 403 may be further configured to:
when output tensor data of a current operator is regarded as the input tensor data by at least two operators, or the current operator has at least two pieces of output tensor data, reserve one split state in a split state set of the output tensor data of the current operator, where a reserved split state is determined according to a same directed edge of the current operator.
In a possible implementation, the second determining unit 403 may be further configured to:
when the current operator has at least two pieces of input tensor data, reserve one split state in the split state set of the input tensor data of the current operator, where the split state is determined according to the same directed edge of the current operator.
In a possible implementation, the weights of the directed edges are determined according to a computational operational type of the target operator corresponding to the splitting paths, a data scale of corresponding sub-data obtained by the tensor data of the target operator through the splitting paths, and a throughput rate and a memory access bandwidth of each processor core.
It should be understood that the foregoing apparatus embodiments are only illustrative, and the apparatus of the present disclosure may also be implemented in other ways. For example, a division of units/modules in the foregoing embodiment is only a logical function division, and there may be other division methods in actual implementations. For example, a plurality of units, modules, or components may be combined or integrated into another system, or some features may be omitted or not implemented.
The units or modules described as separation components may or may not be physically separated. The components described as units or modules may or may not be physical units; in other words, the components may be located in one apparatus, or may be distributed on a plurality of apparatuses. The solutions of the embodiments of the present disclosure may be implemented by selecting some or all of the units according to actual requirements.

The embodiments of the present disclosure also provide a chip, and a neural network chip may be a multi-core chip, including a CPU and a neural network processors (NNP) with N single-cores, where N is an integer greater than 1. The CPU is used for overall control and scheduling of the chip and is the main body of execution of the neural network model processing method in the embodiments of the present disclosure.

The embodiments of the present disclosure also provide a computer device including the chip above or the neural network model processing apparatus 40 above.

The embodiments of the present disclosure also provide a computer storage medium for storing computer software instructions used by the computer device shown in FIG. 2 above, which includes a program for executing the above method embodiments. By executing programs stored, the tensor data associated with the target operator in the calculation graph corresponding to the neural network model may be split to obtain the split state sets corresponding to the tensor data, and the splitting paths of the tensor data between the adjacent split state sets and the weights of the splitting paths may be determined, and then the target splitting path of the tensor data of the target operator may be determined, and finally according to the target splitting path, the tensor data of the target operator of the calculation graph may be split to distribute the tensor data to the corresponding cores of the multi-core processor for processing. In this process, by splitting the tensor data associated with the target operator, a purpose of reducing a computational data scale of the operator may be achieved, and then by selecting the splitting path between the split states corresponding to the tensor data, a splitting method of the tensor data may be further optimized. Finally, by distributing the tensor data obtained by splitting to the multi-core processor, hardware resources of each core in the multi-core processor may be effectively utilized. This solution may effectively reduce end-to-end delay of various neural network models on the multi-core processor.

Those skilled in the art should understand that the embodiments of the present disclosure may be provided as a method, a system, or a computer program product. Therefore, the embodiments of the present disclosure may be implemented wholly in the form of hardware, or wholly in the form of software, or in the form of combining software and hardware. Additionally, the embodiments of the present disclosure may be implemented in the form of the computer program product that is executed in one or more computer-usable storage medium (which may include but be not limited to a magnetic disk storage and an optical storage) that store computer-usable program codes.

The present disclosure is described according to flowcharts and/or block diagrams of the method, the device (system), and the computer program product of the embodiments of the present disclosure. It should be understood that each flow and/or block of the flowcharts and/or the block diagrams and combinations of flows and/or blocks of the flowcharts and/or the block diagrams may be implemented by computer program instructions. The computer program instructions may be provided to the processor of a general-purpose computer, a special-purpose computer, an embedded processing computer, or other programmable data processing devices for generating a machine, so that through the instructions executed by the processor of the computer or the other programmable data processing devices, an apparatus for realizing specified functions of one step or more flows in the flowcharts and/or one or more blocks in the block diagrams may be generated.

These computer program instructions may also be stored in a computer-readable memory that may direct the computer or the other programmable data processing devices to work in a particular manner, so that the instructions stored in the computer-readable memory may generate a product including an instruction apparatus. The instruction apparatus may realize the specified functions of the one or more flows in the flowcharts and/or the one or more blocks in the block diagrams.

These computer program instructions may also be loaded onto the computer or the other programmable data processing devices, so that a series of operational steps may be performed on the computer or the other programmable devices to generate computer-implemented processing. Further, in this way, the instructions executed in the computer or the other programmable devices may provide steps for realizing the specified functions of the one or more flows in the flowcharts and/or the one or more blocks in the block diagrams.

## Claims

1. A method for splitting a neural network model to be processed by a multi-core processor, comprising:

   determining split state sets of tensor data associated with a target operator according to the target operator in a calculation graph corresponding to the neural network model, wherein the tensor data includes input tensor data and output tensor data;
   traversing the split state sets and determining splitting paths of the tensor data of the target operator between adjacent split state sets and weights of the splitting paths;

determining a target splitting path of the tensor data of the target operator according to the weights of the splitting paths; and

splitting the tensor data of the target operator in the calculation graph according to the target splitting path to distribute the tensor data to corresponding cores of the multi-core processor for processing.

2. The method of claim 1, wherein determining the target splitting path of the tensor data of the target operator includes:

traversing the split state sets of the tensor data associated with the target operator, and for a current split state set, traversing each split state thereof to obtain all directed edges directing to a current split state and splitting paths from split states corresponding to starting points of the directed edges to split states of the input tensor data associated with the target operator;

determining splitting paths from the current split state to the split states of the input tensor data of the target operator according to weights of the directed edges and weights of splitting paths from initial split states corresponding to the directed edges to the split states of the input tensor data of the target operator, wherein the weights of splitting paths are determined according to weights of all directed edges corresponding to the splitting paths; and

after all split state sets of the target operator are traversed, obtaining a target splitting path from a split state set of the input tensor data of the target operator to a split state set of the output tensor data of the target operator.

3. The method of claim 1, wherein determining the target splitting path of the tensor data of the target operator includes:

traversing all split state sets of the target operator, and for a current split state set, traversing each split state thereof to obtain all directed edges starting from a current split state and splitting paths from split states corresponding to ending points of the directed edges to split states of the output tensor data of the target operator;

determining splitting paths from the current split state to the split states of the output tensor data of the target operator according to weights of the directed edges and weights of splitting paths from split states corresponding to ending points of the directed edges to the split states of the output tensor data of the target operator, wherein the weights of splitting paths are determined according to weights of all directed edges corresponding to the splitting paths; and

after all split state sets of the target operator are traversed, obtaining a target splitting path from a split state set of the input tensor data of the target operator to a split state set of the output tensor data of the target operator.

4. The method of claim 1, wherein split states in the split state sets of the input tensor data of the target operator of the neural network model are determined according to a computational logic of the target operator and split states in the split state sets of corresponding output tensor data.

5. The method of claim 1, wherein split states in the split state sets of the output tensor data of the target operator of the neural network model are determined according to a computational logic of the target operator and split states in the split state sets of corresponding input tensor data.

6. The method of claim 2, further comprising:

when output tensor data of a current operator is regarded as the input tensor data by at least two operators, or the current operator has at least two pieces of output tensor data, reserving one split state in a split state set of the output tensor data of the current operator, wherein a reserved split state is determined according to a same directed edge of the current operator.

7. The method of claim 3, further comprising:

when a current operator has at least two pieces of input tensor data, reserving one split state in a split state set of the input tensor data of the current operator, wherein the split state is determined according to a same directed edge of the current operator.

8. The method of claim 2 or claim 3, wherein the weights of the directed edges are determined according to a computational operational type of the target operator corresponding to the splitting paths, a data scale of corresponding sub-data obtained by the tensor data of the target operator through the splitting paths, and a throughput rate and a memory access bandwidth of each processor core.

9. An apparatus for splitting a neural network model to be processed by a multi-core processor, comprising:

a first determining unit configured to determine split state sets of tensor data associated with a target operator according to the target operator in a calculation graph corresponding to the neural network model, wherein the tensor data includes input tensor data and output tensor data;

a traversing unit configured to traverse the split state sets and determine splitting paths of the tensor data of the operator between adjacent split state sets and weights of the splitting paths;

a second determining unit configured to determine a target splitting path of the tensor data of the target operator according to the weights of the splitting paths; and

a splitting unit configured to split the tensor data of the target operator of the neural network model according to the target splitting path to distribute the tensor data to corresponding cores of the multi-core processor for processing.

10. The apparatus of claim 9, wherein the second determining unit is specifically configured to:

traverse the split state sets of the tensor data associated with the target operator, and for a current split state set, traverse each split state thereof to obtain all directed edges directing to a current split state and splitting paths from split states corresponding to starting points of the directed edges to split states of the input tensor data associated with the target operator;

determine splitting paths from the current split state to the split states of the input tensor data of the target operator according to weights of the directed edges and weights of splitting paths from initial split states corresponding to the directed edges to the split states of the input tensor data of the target operator, wherein the weights of splitting paths are determined according to weights of all directed edges corresponding to the splitting paths; and

after all split state sets of the target operator are traversed, obtain a target splitting path from a split state set of the input tensor data of the target operator to a split state set of the output tensor data of the target operator.

11. The apparatus of claim 9, wherein the second determining unit is specifically configured to:

traverse all split state sets of the target operator, and for a current split state set, traverse each split state thereof to obtain all directed edges starting from a current split state and splitting paths from split states corresponding to ending points of the directed edges to split states of the output tensor data of the target operator;

determine splitting paths from the current split state to the split states of the output tensor data of the target operator according to weights of the directed edges and weights of splitting paths from split states corresponding to ending points of the directed edges to the split states of the output tensor data of the target operator, wherein the weights of splitting paths are determined according to weights of all directed edges corresponding to the splitting paths; and

after all split state sets of the target operator are traversed, obtain a target splitting path from a split state set of the input tensor data of the target operator to a split state set of the output tensor data of the target operator.

12. The method of claim 9, wherein split states in the split state sets of the input tensor data of the target operator of the neural network model are determined according to a computational logic of the target operator and split states in the split state sets of corresponding output tensor data.

13. The method of claim 9, wherein split states in the split state sets of the output tensor data of the target operator of the neural network model are determined according to a computational logic of the target operator and split states in the split state sets of corresponding input tensor data.

14. The apparatus of claim 10, wherein the second determining unit is further configured to:
when output tensor data of a current operator is regarded as the input tensor data by at least two operators, or the current operator has at least two pieces of output tensor data, reserve one split state in a split state set of the output tensor data of the current operator, wherein a reserved split state is determined according to a same directed edge of the current operator.

15. The apparatus of claim 11, wherein the second determining unit is further configured to:
when a current operator has at least two pieces of input tensor data, reserve one split state in a split state set of the input tensor data of the current operator, wherein the split state is determined according to a same directed edge of the current operator.

16. A chip, wherein the chip integrates the apparatus for splitting the neural network model to be processed by the multi-core processor of any one of claims 9 to 15.

17. A computer device, wherein the computer device includes the chip of claim 16 or the apparatus for splitting the neural network model to be processed by the multi-core processor of any one of claims 9 to 15.

18. A computer device, including processors and a memory that are connected to each other, wherein the processors include a general-purpose processor and an artificial intelligence processor, the memory is configured to store a computer program, the computer program includes a program instruction, and the processors are configured to invoke the program instruction to perform the method of any one of claims 1-8.

19. A computer-readable storage medium, on which a computer program is stored, wherein the computer program includes a program instruction, and the program instruction enables a processor to perform the method of any one of claims 1-8 when the program instruction is executed by the processor.

20. A computer program product, wherein the computer program product includes a non-transitory computer-readable storage medium that stores a computer program, and the computer program is executed to enable a computer to perform the method of any one of claims 1-8.

100      Artificial intelligence application

102      Artificial intelligence framework

104      Artificial intelligence learning library

106      Artificial intelligence runtime library

108      Driver

FIG. 1A

FIG. 1B

Input
[0,n]
[0,ic]
[0,ih]
[0,iw]

Weight
[0,oc]
[0,ic]
[0,kh]
[0,kw]

Convolutional operator

Output
[0,n]
[0,oc]
[0,oh]
[0,ow]

FIG. 1C

| Input<br>[0,n/2]<br>[0,ic/2]<br>[0,ih]<br>[0,iw] | Input<br>[n/2,n]<br>[ic/2,ic]<br>[0,ih]<br>[0,iw] | Weight<br>[0,oc]<br>[0,ic]<br>[0,kh]<br>[0,kw] |

Convolutional operator     Convolutional operator

| Part of<br>output<br>[0,n/2]<br>[0,oc]<br>[0,oh]<br>[0,ow] | Part of<br>output<br>[n/2,n]<br>[0,oc]<br>[0,oh]<br>[0,ow] |

FIG. 1D

| Input<br>[0,n]<br>[0,ic]<br>[0,ih]<br>[0,iw] | Weight<br>[0,oc/2]<br>[0,ic]<br>[0,kh]<br>[0,kw] | Weight<br>[oc/2,oc]<br>[0,ic]<br>[0,kh]<br>[0,kw] |

Convolutional operator     Convolutional operator

| Part of<br>output<br>[0,n]<br>[0,oc/2]<br>[0,oh]<br>[0,ow] | Part of<br>output<br>[0,n]<br>[oc/2,oc]<br>[0,oh]<br>[0,ow] |

FIG. 1E

```
┌──────────────┐   ┌──────────────┐   ┌──────────────┐
│    Input     │   │    Input     │   │    Weight    │
│    [0,n]     │   │    [0,n]     │   │    [0,oc]    │
│   [0,ic/2]   │   │   [ic/2,ic]  │   │    [0,ic]    │
│    [0,ih]    │   │    [0,ih]    │   │    [0,kh]    │
│    [0,iw]    │   │    [0,iw]    │   │    [0,kw]    │
└──────────────┘   └──────────────┘   └──────────────┘
```

Convolutional operator        Convolutional operator

```
┌──────────────┐   ┌──────────────┐
│   Part of    │   │   Part of    │
│   output     │   │   output     │
│    [0,n]     │   │    [0,n]     │
│    [0,oc]    │   │    [0,oc]    │
│    [0,oh]    │   │    [0,oh]    │
│    [0,ow]    │   │    [0,ow]    │
└──────────────┘   └──────────────┘
```

Accumulation

```
┌──────────────┐
│    Output    │
│    [0,n]     │
│    [0,oc]    │
│    [0,oh]    │
│    [0,ow]    │
└──────────────┘
```

FIG. 1F

| Input<br>[0,n]<br>[0,ic]<br>[0,ih/2]<br>[0,iw] | Input<br>[0,n]<br>[ic,ic]<br>[ih/2,ih]<br>[0,iw] | Weight<br>[0,oc]<br>[0,ic]<br>[0,kh]<br>[0,kw] |
|---|---|---|

Convolutional operator     Convolutional operator

| Part of<br>output<br>[0,n]<br>[0,oc]<br>[0,oh/2]<br>[0,ow] | Part of<br>output<br>[0,n]<br>[0,oc]<br>[oh/2,oh]<br>[0,ow] |
|---|---|

FIG. 1G

| Input<br>[0,n]<br>[0,ic]<br>[0,ih]<br>[0,iw/2] | Input<br>[0,n]<br>[ic,ic]<br>[ih,ih]<br>[iw/2,iw] | Weight<br>[0,oc]<br>[0,ic]<br>[0,kh]<br>[0,kw] |

Convolutional operator     Convolutional operator

| Part of<br>output<br>[0,n]<br>[0,oc]<br>[0,oh/2]<br>[0,ow] | Part of<br>output<br>[0,n]<br>[0,oc]<br>[oh/2,oh]<br>[0,ow] |

FIG. 1H

FIG. 2

Determine split state sets of tensor data associated with an operator of a target layer according to the operator of the target layer of a neural network model, where the target layer is at least one layer of the neural network model, and the tensor data includes input tensor data and output tensor data

S301

Traverse the split state sets and determine splitting paths of the tensor data of the operator between adjacent split state sets and weights of the splitting paths

S302

Determine a target splitting path of the tensor data of the target layer according to the weights of the splitting paths

S303

Split the tensor data of the operator of the target layer of the neural network model according to the target splitting path to distribute the tensor data to corresponding cores of a multi-core processor for processing

S304

FIG. 3

Convolutional layer    conv_1

↓

Activation function    Relu

↓

Pooling layer    pool_2

↓

Fully-connected layer 1

↓

Softmax    Classifier

↓

Output layer

FIG. 4

Input 1
[0,n/2]
[0,ic/2]
[0,ih]
[0,iw]

Input 2
[n/2,n]
[ic/2,ic]
[0,ih]
[0,iw]

Weight
[0,oc]
[0,ic]
[0,kh]
[0,kw]

Convolutional operator

Convolutional operator

Part of output
1
[0,n/2]
[0,oc]
[0,oh]
[0,ow]

Part of output
2
[n/2,n]
[0,oc]
[0,oh]
[0,ow]

FIG. 5

FIG. 6

FIG. 7

$X_l$

BN

ReLU

Conv

BN

ReLU

Conv

$X_l^p$

Add

$X_{l-1}$

FIG. 8

40

| First determining unit | Traversing unit | Second determining unit | Splitting unit |

Apparatus for splitting a neural network model to be processed by a multi-core processor

FIG. 9

**EP 4 036 724 A1**

| INTERNATIONAL SEARCH REPORT | International application No. |
|---|---|
| | **PCT/CN2020/116794** |

| A. | CLASSIFICATION OF SUBJECT MATTER |
|---|---|

G06F 9/50(2006.01)i

According to International Patent Classification (IPC) or to both national classification and IPC

| B. | FIELDS SEARCHED |
|---|---|

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

DWPI; CNABS; CNTXT; CNKI; SIPOABS: 多核, 处理器, 神经网络, 模型, 拆分, 计算图, 目标算子, 张量, 数据, 集合, 权重, 路径, multicore, processor, neural network, model, split, graph, target operator, tensor, data, set, weight, path

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 110633153 A (SHANGHAI CAMBRICON INFORMATION TECHNOLOGY CO., LTD.) 31 December 2019 (2019-12-31)<br>claims 1-11 | 1-20 |
| A | CN 106447030 A (SHENZHEN BELINK TECHNOLOGY CO., LTD.) 22 February 2017 (2017-02-22)<br>entire document | 1-20 |
| A | CN 109543830 A (INSTITUTE OF COMPUTING TECHNOLOGY, CHINESE ACADEMY OF SCIENCES) 29 March 2019 (2019-03-29)<br>entire document | 1-20 |
| A | CN 109657782 A (CAMBRICON TECHNOLOGIES CO., LTD.) 19 April 2019 (2019-04-19)<br>entire document | 1-20 |
| A | WO 2018136697 A1 (GOOGLE LLC.) 26 July 2018 (2018-07-26)<br>entire document | 1-20 |

☐ Further documents are listed in the continuation of Box C.     ☑ See patent family annex.

\* Special categories of cited documents:
"A"  document defining the general state of the art which is not considered to be of particular relevance
"E"  earlier application or patent but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

| Date of the actual completion of the international search | Date of mailing of the international search report |
|---|---|
| **01 December 2020** | **15 December 2020** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

33

**INTERNATIONAL SEARCH REPORT**
Information on patent family members

International application No.

**PCT/CN2020/116794**

| Patent document cited in search report | | | Publication date (day/month/year) | Patent family member(s) | | | Publication date (day/month/year) |
|---|---|---|---|---|---|---|---|
| CN | 110633153 | A | 31 December 2019 | None | | | |
| CN | 106447030 | A | 22 February 2017 | None | | | |
| CN | 109543830 | A | 29 March 2019 | WO | 2020057160 | A1 | 26 March 2020 |
| | | | | CN | 109543816 | A | 29 March 2019 |
| | | | | WO | 2020057161 | A1 | 26 March 2020 |
| | | | | WO | 2020057162 | A1 | 26 March 2020 |
| | | | | CN | 109543140 | A | 29 March 2019 |
| | | | | CN | 109543140 | B | 10 July 2020 |
| CN | 109657782 | A | 19 April 2019 | None | | | |
| WO | 2018136697 | A1 | 26 July 2018 | US | 2018204117 | A1 | 19 July 2018 |

Form PCT/ISA/210 (patent family annex) (January 2015)